# EUROPEAN PATENT SPECIFICATION

(11) **EP 1 646 687 B1**
(45) Date of publication and mention of the grant of the patent: **07.02.2007**
(21) Application number: 04766273.9
(22) Date of filing: 20.07.2004
(51) Int. Cl.: C08L 25/04, C08J 5/18, C08J 9/00, C08J 7/00

(54) **NANOPOROUS AND MICROPOROUS MANUFACTS BASED ON SYNDIOTACTIC POLYSTYRENE AND PROCESSES FOR THEIR PREPARATION**
NANOPORÖSE UND MIKROPORÖSE ERZEUGNISSE AUF BASIS VON SYNDIOTAKTISCHEM POLYPROPYLEN UND HERSTELLUNGSVERFAHREN DAFÜR
ARTICLES NANOPOREUX ET MICROPOREUX A BASE DE POLYSTYRENE SYNDIOTACTIQUE ET LEUR PROCEDES DE PREPARATION

(30) Priority: 21.07.2003 IT SA20030013
(43) Date of publication of application: 19.04.2006
(73) Proprietor: Universita' Degli Studi di Salerno, 84084 Fisciano (SA) (IT)
(72) Inventor: GUERRA, Gaetano, I-84127 Salerno SA (IT); MENSITIERI, Giuseppe, I-80132 Napoli NA (IT); VENDITTO, Vincenzo, I-80131 Napoli NA (IT); REVERCHON, Ernesto, I-84123 Salerno SA (IT); DANIEL, Christophe, I-84084 Gaiano di Fisciano SA (IT)
(74) Representative: Germinario, Claudio
(86) International application number: PCT/EP2004/051556
(87) International publication number: WO 2005/012402

(56) References cited:
- EP-A- 1 190 767
- EP-A- 1 217 360
- IT-B- 1 306 004
- RIZZO P ET AL: "Crystalline Orientation in Syndiotactic Cast Films" MACROMOLECULES, AMERICAN CHEMICAL SOCIETY. EASTON, US, vol. 35, no. 15, 16 July 2002 (2002-07-16), pages 5854-5860, XP002300090 ISSN: 0024-9297

## Description

The present invention relates to microporous polymeric materials (i.e, presenting high porosity, often referred as aerogels) based on syndiotactic polystyrene and characterized by the presence of cavities with nanometric dimensions characteristic of the δ crystalline form and to processes for their preparation. These polymeric materials are capable to absorb with a fast kinetics volatile organic compounds from liquid or gaseous phases, also when such components are present at very low concentrations.

### Background of the invention

The present invention is located in the technical-scientific fields of industrial chemistry and engineering, and more specifically in the area of the molecular analysis and separation and it provides possible industrial uses for environment pollution control.

It is well-known that syndiotactic polystyrene (s-PS) is a thermoplastic semi-crystalline polymer which presents a complex polimorphism. In particular, two crystalline forms (α and β) characterized by a transplanar zig-zag chain conformation can be obtained by starting from the melt processes while two other crystalline forms (γ and δ) characterized by a s(2/1)2 helical chain conformation are obtained from solution processes. Furthermore, it is also known that the δ form is a nanoporous crystalline form, which can be obtained by removal of low molecular weight guest molecules from clathrate crystalline forms. Such δ-form is characterized by X-ray diffraction patterns presenting high intensity reflections at 2θ (CuKα) ≃ 8.4°, 10.6°, 13.6°, 17.2°, 20.8°, 23.6°, and by an intensity ratio between two reflections presenting Miller indexes (010) and ( 210), that is I(8.4°)/I(10.6°), larger than 5. Samples containing δ^{~}phase are able to absorb readily, in the crystalline phase, volatile organic compounds from liquid or gaseous mixtures (i.e. to form clathrate), also when those components are present at low concentrations.

Italian patent IT1228915 teaches that polymeric materials in δ form can be preferably obtained from semi-crystalline clathrate manufacts in δ^{~}form by guest removal with solvents, or with gas flow; suitable solvents are acetone and methyl-ethyl-ketone.

In Italian patent application No. SA98A000008 a process to obtain and regenerate nanoporous semicrystalline polymeric materials is described based on syndiotactic polystyrene, which is based on an extraction procedure with liquid or supercritical carbon dioxide. According to the teaching of this patent, this process and the other processes described in the Italian patent IT1228915 are efficient when they are applied to semicrystalline clathrate samples, for which the solvent content is lower than 100 wt% of the dry polymer, i.e. when the polymer concentration is larger than 50 wt%.

It is also well-known that the diffusion kinetics (sorption and desorption) of volatile organic compounds are strongly dependent on the morphology of the semicrystalline polymeric materials. In particular, fine powders present fast sorption kinetics but are difficult to handle. On the other hand, morphologies with low specific surface (film, sheet) are easier to handle in molecular separation processes but they display much slower diffusion kinetics. For example, as described in Italian patent application no. SA2000A000023, polymer films can be used as sensing elements for the detection of chemical substances (for example in resonant sensors) since they show the advantage of being rigid and at the same time they present a higher sensitivity and selectivity than other polymeric sensing films used so far. However, such films have the drawback of slower sorption kinetics and thus the sensor response time is larger with respect to technologies based on the absorption of the pollutant in amorphous phases.

There was therefore a need in the art to provide polymeric materials characterized by fast sorption kinetics while maintaining a good handiness, which could also be efficiently used for molecular separations and for molecular sensors.

It has now been surprisingly found that specific polymeric materials based on syndiotactic polystyrene homopolymers or copolymers, presenting the nanoporous δ phase can solve this problem.

Objects of the present invention are therefore microporous and nanoporous polymeric materials based on syndiotactic polystyrene in the δ crystalline form with an apparent density between 0.001-0.8 g/cm³ and a percentage of crystalline form between 5-70% obtainable according the process comprising the following steps:
a) preparation of a gel based on homopolymers or copolymers of syndiotactic styrene, with a polymer concentration between 0.1 and 50 wt% in a solvent or a mixture of solvents, at least one of said solvents being a suitable guest of a crystalline clathrate phase, of syndiotactic polystyrene , wherein the copolymers can contain as comonomers CH₂=CH-R olefins, wherein R is an alkyl-aryl or a substituted aryl radical with 6-20 carbon atoms.
b) Removal of the solvent from the gel by liquid or supercritical carbon dioxide extraction process, operating at pressures between 50 and 350 bar and temperature between 20 and 70°C.

### BRIEF DESCRIPTION OF DRAWINGS

The present description contains seven drawings showing:
Fig. 1 a scanning electron micrograph of a section of manufact prepared according to Example 1 showing a fibrillar morphology
Fig. 2 the X-ray diffraction pattern (CuKα) of a manufact prepared according to Example 1.
Fig 3 a comparison between the sorption kinetics of: the microporous manufact prepared according to Example 1 and a film of 8 µm thickness (both in nanoporous δ-phase), and a microporous manufact according to the Comparative Example 1 (in β phase.
Fig. 4 the chloroform sorption kinetics obtained at a temperature T = 35°C and a pressure P = 2 Torr for a manufact according to Example 1.
Fig.5 a scanning electron micrograph of a section of manufact prepared according to Comparative Example 1, showing a lamellar morphology.
Fig. 6 the X-ray diffraction pattern (CuKα) of the manufact prepared according to Comparative Example 1.
Fig. 7. a scanning electron micrograph of a section of the manufact according to Example 2.

The polymeric materials object of the present invention are microporous as their apparent density is 0.8 - 0.001 g/cm³, preferably 0.3 - 0.003 g/cm³. In addition, these polymeric materials are semi-crystalline and include a percentage of crystalline δ phase between 5 and 70%, preferably larger than 10% and, thus, are also nanoporous since it is known that the δ-phase of syndiotactic polystyrene is nanoporous. The principal advantage of these new polymeric materials is to present sorption kinetics of volatile organic compounds much faster than those of films and similar to those of fine powders, maintaining at the same time a good handiness.

Within the present description, under polymeric materials is meant the polymeric material based on syndiotactic polystyrene obtained according to the invention.

For syndiotactic polystyrene (sPS), a polymer with syndiotactic sequences of the polymer chain long enough to allow the polymer crystallization into the nanoporous crystalline form is meant. This polymer can be for example synthesized following the procedure described in the European patent N°0271875-Himont Italia. In addition to syndiotactic polystyrene homopolymers, styrene copolymers with CH₂=CH-R olefins, where R is an alkyl-aryl or a substituted-aryl radical with 6-20 carbon atoms with microstructure prevailingly syndiotactic and crystallizable in the nanoporous crystalline δ form, are also included in the definition of manufacts based on syndiotactic polystyrene.

The sPS nanoporous crystalline form according to Italian patent no. 127842 is characterized by a X-ray diffraction pattern presenting high intensity reflections at 2θ (CuKα) ≃ 8.4°, 10.6°, 13.6°, 17.2°, 20.8°, 23.6°, and by an intensity ratio between two reflections presenting Miller indexes (010) and( 2̅10), that is I(8.4°)/I(10.6°), larger than 5. For unoriented samples, the crystallinity index can be easily determined from the X-ray diffraction patterns using the classical method of Hermans and Weidinger. According to this method the crystallinity index is given by the ratio of the diffraction area due to the crystalline phase and the total diffraction area.

Volatile organic compounds which can be sorbed are all the compounds that, after sorption in the nanoporous crystalline δ form, can lead to the formation of crystalline clathrate forms, these compounds thus becoming guest molecules of the clathrate structure. Among these compounds can be cited halogenated molecules (like e.g., chloroform, methylene chloride, carbon tetrachloride, dichloroethane, trichloroethylene, tetrachloroethylene, dibromoethane, methyleneiodide, etc.), aromatic molecules (like e.g. benzene, toluene, styrene, etc.), cyclic molecules (like e.g. cyclohexane, tetrahydrofurane, etc.). It is worth noting that the manufacts are sensitive to the volatile organic compounds most frequently present in industrial wastes, like benzene, toluene, chloroform, methylene chloride, tetrachloroethylene, trichloroethylene, chlorobenzenes, styrene, and xylenes. The liquid and gaseous mixtures from which these compounds can be sorbed can be based on water or air.

The microporous and nanoporous polymeric materials are obtained in the present invention through processes comprising liquid or supercritical carbon dioxide extractions. These processes are applied to gels produced with a solvent which can be a guest of a crystalline clathrate phase of syndiotactic polystyrene said gels containing a polymer based on syndiotactic polystyrene with polymer concentration between 50% and 0.1 wt%, preferably between 30% and 0.5 wt%.

Further object of the present invention is a process for obtaining microporous and nanoporous polymeric materials based on syndiotactic polystyrene in δ form comprising the following steps:
a) preparation of a gel containing homopolymers or copolymers of syndiotactic polystyrene, at a polymer concentration between 0.1 and 50 wt% in a solvent or a mixture of solvents, at least one of said solvents being a suitable guest of a clathrate phase of syndiotactic polystyrene, wherein the copolymers contain as monomers CH₂=CH-R olefins, wherein R is an alkyl-aryl or a substituted-aryl radical with 6-20 carbon atoms.
b) removal of the solvent from the gel with liquid or supercritical carbon dioxide extraction at operating pressures between 50 and 350 bar and temperatures between 20 and 70°C.

Solvents which can be used, pure or in mixtures, for the preparation of the gels described in the invention are benzene, toluene, styrene, decahydronaphthalene, tetrahydrofuran, 1,2-dichloroethane, chloroform, trichlorothylene, carbon disulfide.

The above-mentioned gels can be both of physical type, i.e. characterized by the absence of chemical cross-links between the polymer chains, or of chemical type but with a small amount of chemical cross-links.

Physical gels can be obtained during the polymerization in liquid monomer or during the polymerization in solution of solvents, which in addition to solubilize the styrene, can also be suitable guests molecule of the δ-form of syndiotactic polystyrene.

Gels can be also obtained following the traditional procedures for obtaining physical gels which consist in the polymer dissolution in appropriate solvents, followed by a rapid cooling of the solution.

Chemical gels, i.e. gels containing cross-linked polymers, based on syndiotactic polystyrene, can be easily obtained during the polymerization using vinyl comonomers with at least two functional groups such as, for example, p-divinylbenzene, o-divinylbenzene, etc. In order to ensure that the cross-linked polymer can crystallize it is necessary that only a small amount of cross-links is present and this can be achieved using a low molar ratio between the at least bi-functional monomers and the styrene. In particular, the fraction of comonomer units derived from at least bi-functional monomers has to be between 20 and 0.1 mol%, more preferably below 10 mol%.

The essential characterizing feature of the process according to the present invention is that the removal of the solvent from the gel not only leads to manufacts whose crystalline phase is the nanoporous δ phase but also occurs without any modification of the macroscopic dimensions of the initial gels. This feature is even more surprising if we consider that the process can be applied not only to chemical gels with a low degree of cross-linking but also to physical gels. In the light of the small amount or the total absence of chemical cross-links the collapse of the gel during the removal of the solvent constituting the principal component of the gel was to be expected. As a matter of fact, it is known in the art that if the solvent evaporates, its surface tension acts on the internal structure of the gel and produces its collapse. This does not happen in the process of the invention.

In the case of chemical gels with high degrees of cross-linking such as, for example, those obtained from thermosetting materials like resorcinol-formaldehyde and melamine-formaldehyde, traditional solvent removal processes require to bring the solvent to its supercritical conditions or to exchange the solvent with a more volatile solvent which needs to reach, in turn, supercritical conditions. These extraction procedures ensure the elimination of liquid-vapor surface tension and thereby the accompanying capillary pressure, which acts to collapse the gel network, and thus allow to maintain the three-dimensional gel structure. Presently, the preferred technique to remove solvents from highly crosslinked chemical gels uses carbon dioxide as supercritical drying agent, which allows the drying step to be done under milder conditions and improved safety.

In the present invention the process of supercritical drying by carbon dioxide is applied to physical gels or weakly crosslinked chemical gels based on syndiotactic polystyrene and, surprisingly, this procedure leaves essentially unaltered the initial macroscopic size of the gel, although the fraction of the removed solvent can be as high as 99%.

In the present invention under weakly cross-linked chemical gels are meant gels wherein the fraction of comonomeric units derived from at least bifunctional monomers (the cross-linking units) is comprised between 0.1 and 20 mol %, preferably lower than 10 mol %.

The polymeric materials according to the invention are obtained trough processes comprising an extraction with liquid or supercritical carbon dioxide at operating pressures between 50 and 350 bar and operating temperatures between 20 and 70 °C, more preferably between 25 and 60°C.

In a particularly preferred embodiment, said gels are obtained directly during the syndiospecific polymerization of styrene monomers (or possibly with the above mentioned comonomers) using, for example, the method described in the European patent N°0271875 where the polymerization catalysis takes place in liquid monomer. Therefore, is further object of the present invention a process in which the preparation of the gel, based on syndiotactic homopolymer or copolymers of styrene, takes place in situ through syndiospecific polymerization of styrene which acts both as monomer and solvent of the reaction.

A further object of the present invention are devices and, or sensors for the detection of volatile organic compounds containing the polymeric materials of the present invention.

The following examples are supplied in order to illustrate the invention without limiting the scope thereof.

### Example 1:

The syndiotatic polystyrene homopolymer was supplied by "DOW Chemical" under the trademark Questra 101. The polymer was dissolved in chloroform (10 wt% solution) at 110°C in a hermetic test tube. Then, the solution was quenched at room temperature and a physical gel with a cylindrical shape and dimensions 5 mm x 25 mm is obtained in the test tube.

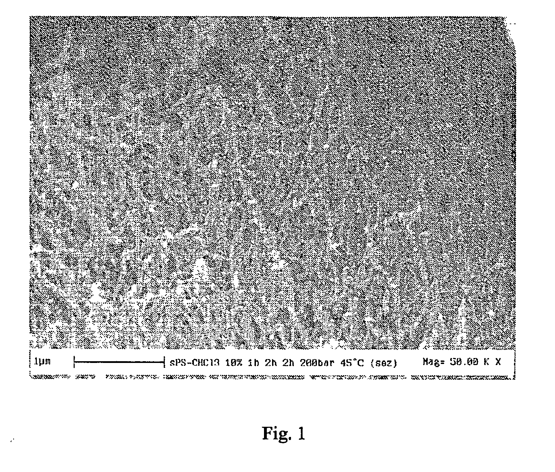

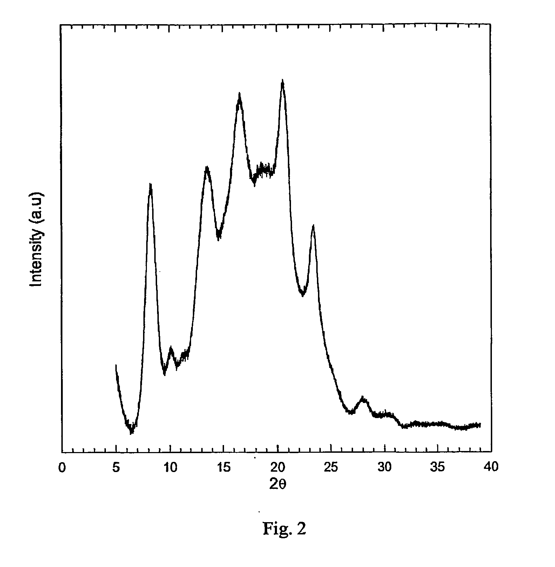

The gel was treated with a supercritical carbon dioxide extraction procedure (T= 45°C, P = 200 bar, extraction time t = 300 min). After extraction, the polymeric materials maintains the form and dimensions of the native gel and presents an amount of solvent molecules below 1 wt%. The apparent density of the polymeric materials is 0.18 g/cm³ and, as shown in the scanning electron micrograph reported in Fig.1, a fibrillar morphology with fiber diameter between 50 and 100 nm is obtained. The X-ray diffraction pattern (CuKα) of this polymeric materials reported in Figure 2, displays strong reflections located at c.a. 8.4°, 10.6°, 13.3°, 16.8°, 20.7°, 23.5° with a ratio of the two reflections I(8.4°)/I(10.6°) larger than 15. This indicates that the polymeric material obtained after the solvent extraction procedure is characterized by the nanoporous crystalline δ phase. The polymeric material crystallinity, determined from the ratio of the diffraction area due to the crystalline phase and the total diffraction area, is equal to 40%.

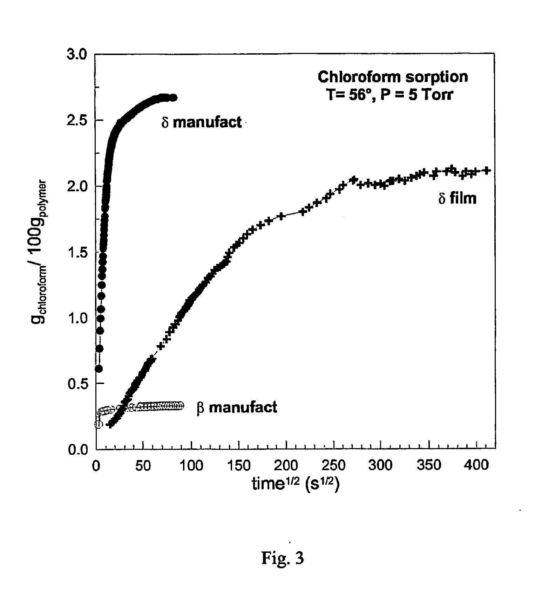

The polymeric material exhibits high sorption kinetics of volatile organic compounds. As an example, the chloroform sorption kinetics obtained at P = 5 torr and T = 56°C for this polymeric material and for a semicrystalline δ form syndiotactic polystyrene film, having a thickness of 8 µm and prepared according to the teaching of Italian patent application no. SAOOA00023, are compared in Figure 3. It comes out from Figure 3 that the chloroform sorption velocity at P = 5 torr and T = 56°C rises by a factor 15 when using the new microcoporous and nanoporous polymeric material instead of the nanoporous film.

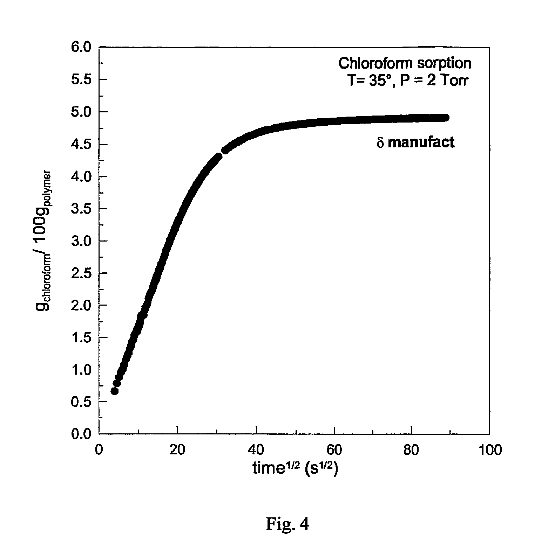

The chloroform sorption kinetics obtained at P = 2 torr and T = 35°C with the polymeric material is also shown in Figure 4.

### Comparative Example 1:

Syndiotactic polystyrene homopolymer of Example 1 was dissolved into chlorotetradecane (10 wt% solution) at T = 220°C in an hermetic test tube. Then the solution was quenched at room temperature and a physical gel with a cylindrical shape and dimensions 5mm x 25mm was obtained in the test tube.

The gel was treated with a supercritical carbon dioxide extraction procedure (T= 45°C, P = 180 bar, extraction time t = 280 min). Similarly to example 1, after the extraction procedure, the polymeric material maintains the form and dimensions of the native gel with an amount of solvent molecules below 1 wt%.

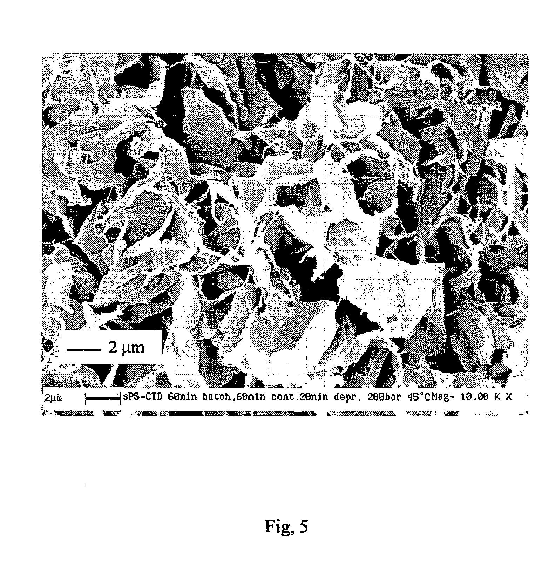

The apparent density of the polymeric material obtained is 0.10 g/cm³ and as shown in the scanning electron micrograph reported in Fig. 5, a lamellar morphology is obtained.

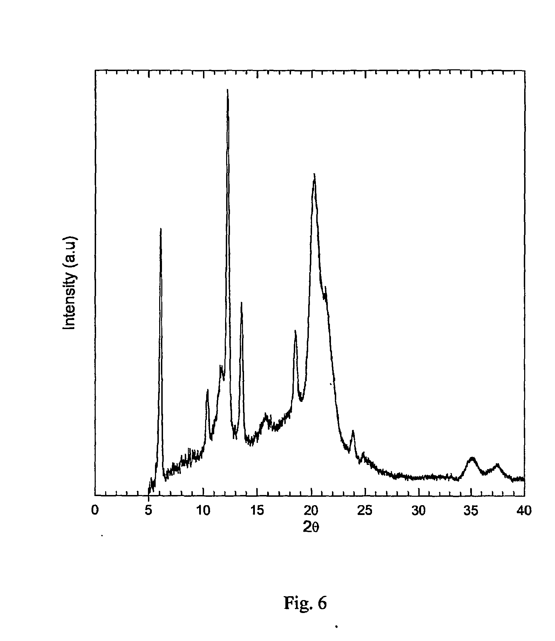

The x-ray diffraction pattern (CuKα) reported in Fig. 6 displays strong reflections located at c.a. 6.1°, 10.4°, 12.25°, 13.55°, 18.50°, 20.20°. This indicates that the polymeric material obtained after solvent extraction procedure is characterized by the β crystalline phase. The crystallinity, determined from the ratio of the diffraction area due to the crystalline phase and the total diffraction area, is equal to 48%.

Despite a lower apparent density than the polymeric material of Example 1, the polymeric material of this comparative example displays a much lower sorption capacity of volatile organic compounds. For example, the chloroform sorption kinetics obtained at a pressure P = 5 torr and a temperature T = 56°C is compared in Figure 3 with the sorption kinetics of the polymeric material obtained in Example 1.

### Example 2:

Syndiotactic polystyrene homopolymer of Example 1 was dissolved into 1,2-dichloroethane (2 wt% solution) at 170°C in a hermetic test tube. Then, the solution was quenched at room temperature and a physical gel with a cylindrical shape and dimensions 5mm x 25mm was obtained in the test tube. The gel obtained shows a viscoelastic behavior with shear moduli measured at 1 rad/s G' = 6.9 x 10³ Pa and G" = 8.6 x 10² Pa .

The gel was treated with a supercritical carbon dioxide extraction procedure (T= 40°C, P = 230 bar, extraction time t = 220 min). After the extraction procedure, the polymeric material maintains the form and dimensions of the native gel with an amount of solvent molecules below 1 wt%.

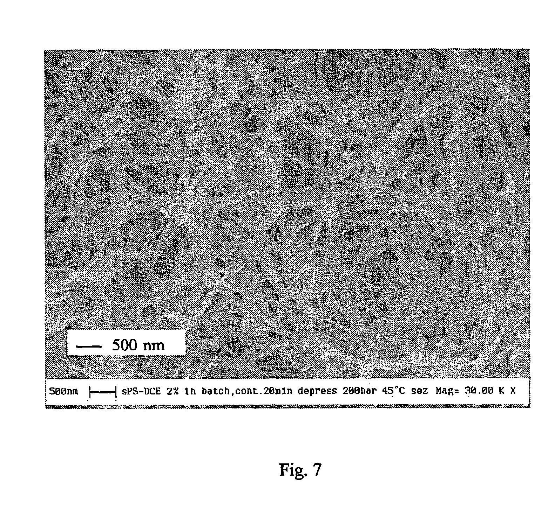

The apparent density of the polymeric material obtained is 0.043 g/cm³ and, as shown in the scanning electron micrograph reported in Fig. 7, a fibrillar morphology with fiber diameter between 50 and 100 nm is obtained.

Furthermore, as shown from the X-ray diffraction pattern (CuKα), the polymeric material obtained after solvent extraction procedure is characterized by the nanoporous δ crystalline phase. The crystallinity, determined from the ratio of the diffraction area due to the crystalline phase and the total diffraction area, is equal to 44%.

### Example 3:

Syndiotactic polystyrene homopolymer of Example 1 was dissolved into toluene (1 wt% solution) at 140°C in a hermetic test tube. Then, the solution was quenched at room temperature and a physical gel with a cylindrical shape and dimensions 5mm x 25mm was obtained in the test tube.

The gel was treated with a supercritical carbon dioxide extraction procedure (T= 40°C, P = 200 bar, extraction time t = 60 min). After the extraction procedure, the polymeric material maintains the form and dimensions of the native gel with an amount of solvent molecules below 1 wt%.

The polymeric material obtained has an apparent density 0.014 g/cm³ and is characterized by fibrillar morphology with fiber diameter between 40 and 70 nm. Furthermore, the polymeric material obtained after the extraction process includes the nanoporous crystalline form and has a crystallinity equal to 45%.

### Example 4:

The syndiotactic polystyrene gel in styrene was achieved by polymerization at 50°C of 40 ml of styrene in a 100 mL flask under nitrogen atmosphere, by using 2 mg of cyclopentadienyl-titanium-trichloride (CpTiCl₃) and 290mg of methylalumoxane (MAO). The monomer was dried over calcium hydride for 48h under hydrogen atmosphere and distilled under a reduced pressure before use. The gel formation occurred already after 3 minutes of polymerization.

The gel was treated with a supercritical carbon dioxide extraction procedure (T= 40°C, P = 200 bar, extraction time t = 60 min). After the extraction procedure, the polymeric material maintains the form and dimensions of the native gel with an amount of solvent molecules below 1 wt%.

The polymeric material obtained has an apparent density of. 0.18 g/cm³. Furthermore the polymeric material obtained after the extraction procedure includes the nanoporous δ crystalline phase as shown by the X-ray diffraction pattern (CuKα). The crystallinity, determined from the ratio of the diffraction area due to the crystalline phase and the total diffraction area, is 30%.

### Example 5:

This example relates to a procedure to remove the solvent present in the gel using carbon dioxide.

The procedure consists in the loading of the gel in a temperature-controlled vessel capable to operate in pressure conditions and then in the pressurization, at constant temperature, of the vessel with liquid or supercritical carbon dioxide up to the selected operating pressure. The test involves a 60 min step without carbon dioxide flow, then a 70 to 150 min step under carbon dioxide flow in order to remove the mixture of solvent and supercritical fluid and finally 60 to 120 minutes of a slow camera depressurization.

## Claims

1. Microporous and nanoporous polymeric materials with apparent density of 0.001 - 0.8 g/cm³ based on syndiotactic polystyrene in the δ crystalline form with a percentage of crystallinity between 5-70%, obtainable according the process comprising the following steps:
a) preparation of a gel based on syndiotactic homopolymer or copolymers of styrene, at a polymer concentration between 0.1 and 50 wt% in a solvent or a mixture of solvents, one of which being a suitable guest of a syndiotactic polystyrene clathrate phase, wherein the copolymers contain as comonomers CH₂=CH-R olefins, wherein R is an alkyl-aryl or a substituted-aryl radical with 6-20 carbon atoms.
b) removal of the solvent from the gel by liquid or supercritical carbon dioxide extraction process, operating at pressures between 50 and 350 bar and temperature between 20 and 70°C.

2. Polymeric materials according to claim 1, wherein the homopolymer or copolymer concentration in the gel is in the range 0,5 - 30 wt%.

3. Polymeric materials according to anyone of claims 1 and 2, wherein the gel can be a physical gel or a chemical gel wherein the fraction of comonomer units derived from the at least bi-functional monomers used as cross-linking agents is between 20 and 0.1 mol%, preferably below 10 mol%.

4. Process for preparing microporous and nanopous polymeric materials based on syndiotactic polystyrene being in the δ crystalline form, comprising the following steps:
a) preparation of a gel based on homopolymers or copolymers of syndiotactic polystyrene, at a polymer concentration between 0.1 and 50 wt% in a solvent or a mixture of solvents, at least one of said solvents being a suitable guest of a clathrate phase of syndiotactic polystyrene, wherein the copolymers contain as comonomeric units CH₂=CH-R olefins, where R is an alkyl-aryl or a substituted-aryl radical with 6-20 carbon atoms.
b) Removal of the solvent from the gel by liquid or supercritical carbon dioxide extraction process, operating at pressures between 50 and 350 bar and temperature between 20 and 70°C.

5. Process according to claim 4 wherein in said step a) the homopolymer or copolymer concentration in the gel is in the range 0.5-30 wt%.

6. Process according to anyone of claims 4 and 5 wherein said gel can be a physical gel or a chemical gel wherein the fraction of comonomer units derived from the at least bi-functional monomers used as cross linking agents is between 20 and 0.1 mol%, and preferably below 10 mol%.

7. Process according to claims 4 to 6 wherein in said step a) said gel based on homopolymers or copolymers of syndiotactic polystyrene is prepared in situ through the polymerization of styrene which acts both as monomer and solvent of the reaction.

8. Use of the polymeric materials as claimed in claims 1 to 3 as sorbing elements with a fast kinetics of sorption of volatile organic compounds, alone or when present in liquid or gaseous mixtures.

9. Devices and, or sensors for the detection of organic volatile compounds which contain polymeric materials as claimed in claims 1 to 3.

## Patentansprüche

1. Mikroporöse und nanoporöse Polymermaterialien mit einer scheinbaren Dichte von 0,001 - 0,8 g/cm³ auf der Grundlage syndiotaktischen Polystyrols in der δ-kristallinen Form mit einem Prozentsatz an Kristallinität zwischen 5-70%, erhältlich gemäß dem Verfahren, das die folgenden Schritte umfaßt:
a) Herstellung eines Gels auf der Grundlage eines syndiotaktischen Homopolymers oder Copolymeren von Styrol in einer Polymerkonzentration zwischen 0,1 und 50 Gew.-% in einem Lösungsmittel oder einem Gemisch von Lösungsmitteln, wovon eines ein geeigneter Gast einer Klathratphase syndiotaktischen Polystyrols ist, wobei die Copolymeren als Comonomeren Olefine CH₂=CH-R enthalten, worin R ein Alkylaryl- oder ein substituierter Arylrest mit 6-20 Kohlenstoffatomen ist,
b) Entfernen des Lösungsmittels aus dem Gel durch ein bei Drücken zwischen 50 und 350 bar und einer Temperatur zwischen 20 und 70°C durchgeführtes Extraktionsverfahren mit flüssigem oder überkritischem Kohlendioxid.

2. Polymermaterialien gemäß Anspruch 1, wobei die Homopolymer- oder Copolymerkonzentration in dem Gel in dem Bereich von 0,5 - 30 Gew.-% ist.

3. Polymermaterialien gemäß einem der Ansprüche 1 und 2, wobei das Gel ein physikalisches Gel oder ein chemisches Gel sein kann, bei dem der Anteil der Comonomereinheiten, die sich von den als Vernetzer verwendeten, wenigstens bifunktionellen Monomeren ableiten, zwischen 20 und 0,1 Mol-%, vorzugsweise unter 10 Mol-% ist.

4. Verfahren zum Herstellen mikroporöser und nanoporöser Polymermaterialien auf der Grundlage syndiotaktischen Polystyrols in der δ-kristallinen Form, das die folgenden Schritte umfaßt:
a) Herstellung eines Gels auf der Grundlage von Homopolymeren oder Copolymeren syndiotaktischen Polystyrols in einer Polymerkonzentration zwischen 0,1 und 50 Gew.-% in einem Lösungsmittel oder einem Gemisch von Lösungsmitteln, wobei wenigstens eines der Lösungsmittel ein geeigneter Gast einer Klathratphase syndiotaktischen Polystyrols ist und die Copolymeren als Comonomereinheiten Olefine CH₂=CH-R enthalten, worin R ein Alkylaryl- oder ein substituierter Arylrest mit 6-20 Kohlenstoffatomen ist,
b) Entfernen des Lösungsmittels aus dem Gel durch ein bei Drücken zwischen 50 und 350 bar und einer Temperatur zwischen 20 und 70°C durchgeführtes Extraktionsverfahren mit flüssigem oder überkritischem Kohlendioxid.

5. Verfahren gemäß Anspruch 4, wobei in dem Schritt a) die Homopolymer- oder Copolymerkonzentration in dem Gel in dem Bereich von 0,5 - 30 Gew-.% ist.

6. Verfahren gemäß einem der Ansprüche 4 und 5, wobei das Gel ein physikalisches Gel oder ein chemisches Gel sein kann, bei dem der Anteil der Comonomereinheiten, die sich von den als Vernetzer verwendeten, wenigstens bifunktionellen Monomeren ableiten, zwischen 20 und 0,1 Mol-% und vorzugsweise unter 10 Mol-% ist.

7. Verfahren gemäß einem der Ansprüche 4 bis 6, wobei in Schritt a) das Gel auf der Grundlage von Homopolymeren oder Copolymeren syndiotaktischen Polystyrols in situ durch die Polymerisation von Styrol, das sowohl als Monomer als auch Lösungsmittel der Reaktion wirksam ist, hergestellt wird.

8. Verwendung der in den Ansprüchen 1 bis 3 beanspruchten Polymermaterialien als sorbierende Elemente mit einer schnellen Kinetik der Sorption flüchtiger organischer Verbindungen allein oder beim Vorliegen in flüssigen oder gasförmigen Gemischen.

9. Vorrichtungen und/oder Sensoren zum Nachweis organischer flüchtiger Verbindungen, die in den Ansprüchen 1 bis 3 beanspruchte Polymermaterialien enthalten.

## Revendications

1. Matériaux polymériques microporeux et nanoporeux à base de polystyrène syndiotactique sous la forme cristalline δ ayant une densité apparente comprise entre 0.001 et 0.8 g/cm³ et une cristallinité comprise entre 5 et 70% obtenibles selon le procédé de préparation comprenant la succession d'étapes suivantes :
a) Préparation d'un gel à base d'un homopolymère ou de copolymères du styrène à une concentration en polymère comprise entre 0.1 et 50 % en poids dans un solvant ou un mélange de solvants dont l'un de ceux-ci peut être inclus au sein d'une phase clathrate d'un polystyrène syndiotactique, où les copolymères contient des oléfines CH₂=CH-R comme comonomères, où R est un alkyle-aryle ou un radical aryle substitué avec 6 à 20 atomes de carbone.
b) Enlèvement du solvent du gel par du dioxyde de carbone liquide ou supercritique opérant à une pression comprise entre 50 et 350 bar et une température entre 20 et 70°C.

2. Matériaux polymériques selon la revendication 1, pour lesquels la concentration en polymère ou copolymères dans le gel est comprise entre 0.5 et 30% en poids.

3. Matériaux polymériques selon l'une quelconque des revendications 1 et 2, pour lesquels le gel peut être un gel physique ou un gel chimique au sein duquel la fraction de comonomères derivés par des monomères au moins bi-fonctionnels utilisés comme agents de réticulation est comprise entre 20 et 0.1 % en mole et de préférence inférieure a 10% en mole.

4. Procédé de préparation de matériaux polymériques microporeux et nanoporeux à base de polystyrène syndiotactique dans la forme cristalline δ comprenant la succession d'étapes suivantes :
a. Préparation d'un gel bases sur un homopolymère ou des copolymères du polystyrène syndiotactique à une concentration en polymère comprise entre 0.1 et 50 % en poids dans un solvant ou un mélange de solvants dont l'un au moins de ceux-ci peut être inclus au sein d'une phase clathrate du polystyrène syndiotactique, où les copolymères contient des oléfines CH₂=CH-R comme comonomère, où R est un alkyle-aryle ou un radical aryle substitué avec 6 à 20 atomes de carbone.
b. Enlèvement du solvent du gel par du dioxyde de carbone liquide ou supercritique opérant à une pression comprise entre 50 et 350 bar et une température entre 20 et 70°C.

5. Procédé selon la revendication 4, dans laquelle dite etape a) la concentration en polymère ou en copolymère dans le gel, est comprise entre 0.5 et 30% en poids.

6. Procédé selon l'une quelconque des revendications 4 et 5, dans lequel dit gel peut être un gel physique ou un gel chimique au sein duquel la fraction de unités comomériques obtenus à partir de monomères au moins bi-fonctionnels utilisés comme agents de réticulation est comprise entre 20 et 0.1 % en mole et de préférence inférieure a 10% en mole.

7. Procédé selon les revendications 4 à 6, dans laquelle dite éetape a) le dit gel à base de homopolymères ou de copolymères du polystyrène syndiotactique, est préparé par polymérisation in situ du styrène qui joue le rôle de solvant et de monomère lors de la réaction.

8. Utilisation de matériaux polymériques selon les revendications de 1 à 3 comme éléments absorbant ayant une cinétique d'absorbsion rapide des composés organiques volatils, isolés ou présents dans des mélanges gazeux ou liquides.

9. Dispositifs et, ou détecteurs pour la détection de composés organiques volatils comprenant matériaux polymériques selon les revendications 1 à 3.
